# NEUE EUROPÄISCHE PATENTSCHRIFT

(11) **EP 3 084 154 B2**
(45) Veröffentlichungstag und Bekanntmachung des Hinweises auf die Entscheidung über den Einspruch: **03.11.2021**
(45) Hinweis auf die Patenterteilung: 21.02.2018
(21) Anmeldenummer: 14827738.7
(22) Anmeldetag: 16.12.2014
(51) Int. Cl.: B22F 3/03, B22F 3/11, B22F 3/26, B22F 7/06, B23K 20/12, C22C 33/02, C22C 38/00, C22C 38/04, F01L 3/02, F01L 3/08, B22F 5/10, C22C 38/20, C22C 38/60

(54) **DOUBLE / TRIPLE LAYER VENTILFÜHRUNG**
DOUBLE/TRIPLE-LAYER VALVE GUIDE
GUIDE DE SOUPAPE DOUBLE/TRIPLE COUCHE

(30) Priorität: 18.12.2013 DE 102013021059
(43) Veröffentlichungstag der Anmeldung: 26.10.2016
(73) Patentinhaber: Bleistahl-Produktions GmbH & Co KG., 58300 Wetter (DE)
(72) Erfinder: HÜNSCHE, Ingwar, 58300 Wetter (DE); BLECKING, Christian, 58332 Schwelm (DE); KÖHLER, Ekkehard, 58300 Wetter / Ruhr (DE); EMDE, Dirk, 58256 Ennepetal (DE)
(74) Vertreter: Thiel, Christian
(86) Internationale Anmeldenummer: PCT/EP2014/077943
(87) Internationale Veröffentlichungsnummer: WO 2015/091467

(56) Entgegenhaltungen:
- DE-A1- 10 343 680
- DE-A1- 19 606 270
- JP-A- S6 477 708
- JP-A- 2005 330 559
- US-A- 2 775 024
- US-A1- 2002 023 518

## Beschreibung

Die Erfindung betrifft eine pulvermetallurgisch hergestellte Ventilführung für Verbrennungsmotoren mit einem Grundköper, einem nockenseitigen und einem kanalseitigen Endstück.

Ventilführungen für Verbrennungsmotoren befinden sich im Zylinderkopf und haben die Aufgabe, das oszillierende Ventil so zu führen, dass es an dem Ventilsitzring dicht anliegen und dadurch den Gaskanal verschließen kann.

Bereits seit vielen Jahrzehnten werden Ventilführungen pulvermetallurgisch hergestellt. Unter anderem stellt die herstellungsbedingte Porosität einen besonderen Vorteil dar, da die Poren sich mit Öl füllen und die Schmierwirkung zwischen Ventilführung und Ventilschaft verbessert wird. Eine gute Schmierung ist zwischen diesen Komponenten notwendig, da durch die oszillierende Bewegung Reibung entsteht.

Grundsätzlich kann man eine in einem Verbrennungsmotor eingebaute Ventilführung in einen Mittelteil, ein nockenseitiges und ein kanalseitiges Endstück unterteilen. Jeder dieser Abschnitte ist anderen Umgebungsbedingungen ausgesetzt und hat andere Funktionen zu erfüllen.

So ist das kanalseitige Endstück (insbesondere bei Auslassventilen) hohen Temperaturen ausgesetzt und muss daher temperaturbeständig sowie korrosions- und verschleißfest sein.

Der Mittelteil, der im Wesentlichen den mittleren Bereich der Ventilführung umfasst, hat zum einen die Aufgabe, die Wärme aus dem kanalseitigen Endstück in Richtung Zylinderkopf (der gekühlt wird) zu leiten. Zum anderen muss er aber auch eine gute Schmierung zwischen Führung und Schaft gewährleisten. Außerdem soll der Mittelteil eine gute Bearbeitbarkeit ermöglichen, damit nach der Endbearbeitung durch den Motorenbauer im Zylinderkopf eine hohe Maßhaltigkeit für die Fluchtung der Ventile gewährleistet ist.

Das nockenseitige Endstück, das aus dem Zylinderkopf hinausragt, sollte ebenfalls verschleißfest sein, obwohl sich die Verschleißmechanismen Abrasion und Adhäsion aufgrund der niedrigeren Umgebungstemperatur nicht so stark auswirken wie beim kanalseitigen Endstück. Idealerweise wird der nockenseitige Austritt von Öl und Gas aus dem Zylinderkopf vermieden.

Ventilführungen, die aus einem Material hergestellt werden, können nicht alle Funktionen der drei unterschiedlichen Abschnitte gleichzeitig erfüllen. So ist beispielsweise ein Material mit hoher Porosität geeignet, Öl aufzunehmen. Andererseits ist es aufgrund der Poren besonders anfällig für Korrosion. Solch ein Material wäre geeignet für den Mittelteil, aber weniger für die Kanalseite. Durch die Poren kann weiterhin Öl austreten. Ein weiteres Beispiel ist ein besonders verschleißfestes Material, dass sich jedoch nicht gut bearbeiten lässt, was dem kanalseitigen Material entspricht.

In der Druckschrift GB 780 073 A wird eine Lösung vorgeschlagen, Oxidation und Korrosion bei pulvermetallurgisch hergestellten Ventilführungen zu vermeiden. Dies geschieht durch einen korrosionsresistenten metallischen Mantel, der durch Beschichtung auf die Ventilführung oder auf Teile derselben angebracht wird.

Die Druckschrift DE 103 43 680 A1 offenbart eine Lösung zur Erhöhung der Öl- und Gasdichtigkeit von Ventilführungen durch eine Kupferinfiltrierung des nockenseitigen Endes.

Die genannten Druckschriften bieten lediglich Teillösungen für die diversen Aufgaben der drei genannten Abschnitte der Ventilführung. Zudem handelt es sich nicht um der Ventilführung inhärente Eigenschaften. Vielmehr muss durch einen zusätzlichen Arbeitsschritt ein korrosionsbeständiger Mantel oder eine Kupferhülse an der Ventilführung angebracht werden, um die gewünschte Wirkung zu erzielen.

Dementsprechend liegt der Erfindung die Aufgabe zugrunde, eine pulvermetallurgisch hergestellte Ventilführung bereitzustellen, die abschnittsweise aus verschiedenen Materialien besteht, um dadurch die unterschiedlichen und besonderen Anforderungen der jeweiligen Abschnitte gleichzeitig erfüllen zu können.

Diese Aufgabe wird durch eine pulvermetallurgisch hergestellte Ventilführung gemäß Anspruch 1 gelöst.

Der Vorteil der Erfindung ist, dass die einzelnen Abschnitte der Ventilführung den unterschiedlichen (Werkstoff-)Anforderungen angepasst sind.

Das nockenseitige Endstück kann aus dem ersten; aus dem zweiten oder einem dritten Material bestehen. Die Verwendung des ersten oder zweiten Materials erleichtert insbesondere das Herstellverfahren. Insbesondere der Pressvorgang kann dadurch vereinfacht und verkürzt werden. Bevorzugt besteht auch das nockenseitige Endstück aus dem zweiten Material.

Bei den Materialien handelt es sich beispielsweise um Sinterstähle, die die jeweils gewünschten Eigenschaften aufweisen.

Das erste Material setzt sich beispielsweise zusammen aus
- 78 bis 88 Gew.-% Fe,
- 10 bis 20 Gew.-% Cu,
- 0,8 bis 1 Gew.-% Mn,
- 0,4 bis 0,6 Gew.-% S und
- 0,8 bis 2 Gew.-% C

Die Zusammensetzung bezieht sich auf eine Analyse des gesinterten Materials.

Weitere Elemente/Legierungsbestandteile können in einem Anteil von zusammen bis zu 4 Gew.-% vorhanden sein.

Eine konkrete beispielhafte Zusammensetzung des ersten Materials ist:
- 84 Gew.-% Fe,
- 12 Gew.-% Cu,
- 0,8 Gew.-% Mn,
- 0,5 Gew.-% S,
- 0,9 Gew.-% C
- ggf. weitere Elemente/Legierungsbestandteile auf 100 Gew.-%,
wobei der Kupferanteil des ersten Materials kein infiltriertes Kupfer beinhaltet.

Der Kupferanteil von mindestens 10% gewährleistet eine hohe Wärmeleitfähigkeit. Der Mittelteil kann somit die hohen Temperaturen der Kanalseite und des Ventils zur Nockenseite weiterleiten. Das Kupfer wird in Form von Kupfer- bzw. Kupferlegierungspulver in die Mischung vor dem Pressen eingebracht. Schwefel (S) und weiche Mangansulfide (MnS) wirken als Festschmierstoffe und verbessern die Notlaufeigenschaft des tribologischen Systems aus Führung und Schaft, für den Fall, dass zu wenig Motoröl für die Schmierung vorhanden ist. Die Zusammensetzung des ersten Materials gewährleistet eine gute mechanische Bearbeitbarkeit.

Das zweite Material setzt sich beispielsweise zusammen aus:
- 82 bis 86 Gew.-% Fe,
- 1,0 bis 1,5 Gew.-% Cr,
- 12 bis 16 Gew.-% Cu,
- 0,6 bis 0,8 Gew.-% Mn,
- 0,4 bis 0,6 Gew.-% S,
- 0,5 bis 2,0 Gew.-% C und
- ggf. weiteren Elementen/Legierungsbestandteilen, die bis zu 3,5 Gew.-% ausmachen können.

Die Zusammensetzung bezieht sich auf eine Analyse des gesinterten Materials.

Eine konkrete beispielhafte Zusammensetzung des zweiten Materials ist:
- 84 Gew.-% Fe,
- 1,2 Gew.-% Cr,
- 12 Gew.-% Cu,
- 0,7 Gew.-% Mn,
- 0,5 Gew.-% S,
- 0,6 Gew.-% C und
- ggf. weitere Elemente/Legierungsbestandteile auf 100 Gew.-%,
wobei der Kupferanteil des zweiten Materials kein infiltriertes Kupfer beinhaltet.

Ein Unterschied zum ersten Material ist der Chromanteil, der zu einer höheren Verschleißbeständigkeit durch Ausbildung von Chromcarbiden führt. Zudem ist das zweite Material geeignet, hohen Temperaturen über einen langen Zeitraum standzuhalten. In der Regel weist das kanalseitige Endstück aufgrund der höheren Temperaturen stärkere Verschleißerscheinungen auf als die Nockenseite. Das zweite Material zeichnet sich daher durch eine hohe Verschleißfestigkeit aus.

Als Verschleißmechanismen bei Ventilführungen für Verbrennungsmotoren treten häufig Adhäsion und Abrasion auf. Diese wirken zwischen Ventilführung und Ventilschaft und sind kanalseitig stärker ausgeprägt als nockenseitig. Besonders problematisch sind Verschleißerscheinungen bei Auslassventilführungen. Diese führen dort zur Vergrößerung der Spaltbreite zwischen Ventilführung und Ventilschaft. Partikel können dadurch in den Gleitbereich gelangen und zum Klemmen des Ventilschafts führen. Die Folge ist das Versagen des Motors. Der Kupferanteil im zweiten Material trägt daher zusätzlich zur Verbesserung der mechanischen Eigenschaften wie Härte und Festigkeit bei.

Das erste und das zweite Material unterscheiden sich in der Härte, wobei die im Vergleich zum zweiten Material des kanalseitigen Endstücks geringere Härte des ersten Materials des Mittelteils eine gute Bearbeitbarkeit gewährleistet und das härtere Material des kanalseitigen Endstücks eine hohe Verschleißfestigkeit und Temperaturbeständigkeit mit sich bringt.

Eine typische Wärmeleitfähigkeit für den Mittelteil pulvermetallurgisch hergestellter Ventilführungen liegt in einem Bereich von 21 bis 48 W/(mK).

Pulvermetallurgisch hergestellte Ventilführungen zeichnen sich gegenüber anderen (z. B. gegossenen) Ventilführungen dadurch aus, dass sie über Poren verfügen, die eine gewisse Ölmenge aufnehmen können. Ein höherer Ölgehalt führt zu verbesserten Schmiereigenschaften der Ventilführung. Dies ist im Hinblick auf die ständige Reibung zwischen Ventilführung und Ventilschaft ein wesentlicher Vorteil.

Die Dichte für pulvermetallurgisch hergestellte Ventilführungen auf Fe-Basis liegt im Bereich von 6,5 bis 7 g/cm³. Daraus folgt eine Porosität von etwa 10 bis 20%. Da für den Mittelteil eine hohe Porosität erforderlich ist, liegt die Porosität für das erste Material im Bereich zwischen 15 und 20% und bevorzugt zwischen 17 und 20%. Die Porosität des Mittelteils steht für die Ölaufnahmefähigkeit und hat Einfluss auf die triboligischen Eigenschaften.

In einer Ausführungsform kann die pulvermetallurgisch hergestellte Ventilführung zusätzlich an der Nockenseite mit einer Kupferinfiltrierung versehen werden. Bevorzugt sind dabei die Außenseiten und/oder die Stirnseite des nockenseitigen Endes infiltriert. Dies erhöht die Öl- und Gasdichtigkeit und reduziert zusätzlich den umweltschädlichen Verbrauch von Motoröl. Die Kupferinfiltrierung umfasst dabei den Bereich von den Außenflächen bis maximal zur Wandungsmitte des nockenseitigen Endstücks, bevorzugt jedoch den eins bis drei Millimeter dünnen Randschichtbereich.

Die Fertigung der erfindungsgemäßen Ventilführung kann in fünf Schritten erfolgen. In einem ersten Schritt wird das Pulver für das aus dem zweiten Material bestehende kanalseitige Endstück in eine Matrize, die koaxial zu einem Dorn angeordnet ist, gefüllt und ggf. mit Presswerkzeug vorverdichtet, in einem zweiten Schritt wird das Pulver für den aus dem ersten Material bestehenden Mittelteil in die Matrize gefüllt und ggf. mit dem Presswerkzeug vorverdichtet, in einem dritten Schritt wird das Pulver für das aus dem zweiten oder einem dritten Material bestehende nockenseitige Endstück in die Matrize gefüllt und ggf. mit dem Presswerkzeug vorverdichtet, in einem vierten Schritt wird die gesamte Ventilführung in der Matrize mit dem Presswerkzeug verdichtet, wobei die Form des Presslings insbesondere durch die Form der Matrize und des Dorns bestimmt wird, und in einem fünften Schritt wird die gesamte Ventilführung gesintert. Dabei kann die Reihenfolge der zu verdichtenden Ventilführungsabschnitte umgekehrt werden, sodass zunächst das kanalseitige Endstück, dann der Mittelteil und zuletzt das nockenseitige Endstück verdichtet wird. Es versteht sich von selbst, dass ein Arbeitsschritt entfallen kann, wenn der Mittelteil und das nockenseitige Endstück aus demselben Material bestehen. Des Weiteren ist es möglich, dass das nockenseitige Endstück aus einem dritten Material hergestellt werden kann. Die Verdichtungsschritte können in einem Schritt zusammengefasst werden, das bedeutet, dass Zwischenverdichtungen entfallen können.

Der Pulvermischung können Presshilfmittel, beispielsweise Wachs, hinzugefügt werden, um den Zusammenhalt des Presslings zu verstärken. Durch das spätere Sintern verdampft das Wachs vollständig und ist somit nicht mehr Bestandteil der gesinterten Ventilführung.

Im Gegensatz zu Verfahren, bei denen Ventilführungen aus einem Material gefertigt werden, hat dieses Verfahren den Vorteil, dass durch das Pressen die Dichte und die Porosität des Mittelteils gut eingestellt werden kann.

In einer besonderen Ausführungsform des Verfahrens können die verdichtete Ventilführung und ein Kupferkörper miteinander gesintert werden, wobei der Kupferkörper eng an der Nockenseite der verdichteten Ventilführung anliegt oder darauf aufliegt und gewichtsmäßig auf die Menge an zu infiltrierendem Kupfer abgestimmt wird. Bevorzugt handelt es sich bei dem Kupferkörper um eine Hülse. Vorteilhalft wirkt sich aus, dass die aus mehreren Materialien bestehende Ventilführung und der Kupferkörper, der die Öl- und Gasdichtigkeit erhöht, in einem Arbeitsschritt - dem Sintern - miteinander verbunden werden. Die einzelnen Elemente bzw. Abschnitte der Ventilführung können auch für sich pulvermetallurgisch gefertigt werden und anschließend durch Reibschweißen miteinander verbunden werden.

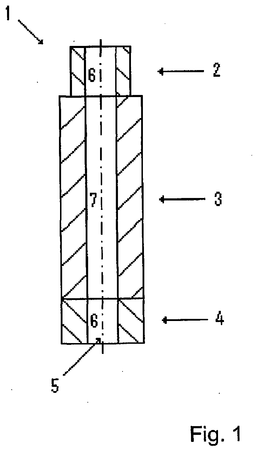

Die Abbildung zeigt eine Schnittansicht für eine beispielhafte Ausführungsform der erfindungsgemäßen Ventilführung 1. Die Ventilführung besteht aus einem nockenseitigen Endstück 2, einem Mittelteil 3 und einem kanalseitigen Endstück 4. Die Bohrung, in welcher der Ventilschaft läuft, ist mit 5 bezeichnet. In dieser Ausführungsform besteht der Mittelteil aus dem ersten Material 7 und das nockenseitige sowie kanalseitige Endstück aus dem zweiten Material 6.

## Patentansprüche

1. Pulvermetallurgisch hergestellte Ventilführung für Verbrennungsmotoren auf Fe-Basis mit einem Mittelteil, einem nockenseitigen und einem kanalseitigen Endstück, **dadurch gekennzeichnet, dass** der Mittelteil aus einem ersten Material mit einer Porosität von 15 bis 20 % bei einer Dichte im Bereich von 6,5 bis 7 g/cm3 und das kanalseitige Endstück aus einem zweiten Material besteht, wobei das zweite Material eine Härte von mehr als 70 HRB aufweist und das erste Material eine um wenigstens 10 HRB geringere Härte.

2. Ventilführung nach Anspruch 1 **dadurch gekennzeichnet, dass** das nockenseitige Endstück aus dem ersten, aus dem zweiten oder einem dritten Material besteht.

3. Ventilführung nach Anspruch 1 und 2 **dadurch gekennzeichnet, dass** das erste Material aus 78 bis 88 Gew.-% Fe, 10 bis 20 Gew.-% Cu, 0,8 bis 1 Gew.-% Mn, 0,4 bis 0,6 Gew.-% S, 0,8 bis 1 Gew.-% C bis zu 4 Gew.-% weiteren Elementen besteht.

4. Ventilführung nach Anspruch 1 und 2 **dadurch gekennzeichnet, dass** das zweite Material aus 82 bis 86 Gew.-% Fe, 1,1 bis 1,3 Gew.-% Cr, 12 bis 16 Gew.-% Cu, 0,6 bis 0,8 Gew.-% Mn, 0,4 bis 0,6 Gew.-% S, 0,5 bis 0,7 Gew.-% C und 0,9 bis 1,1 Gew.-% Sn besteht.

5. Ventilführung nach einem der Ansprüche 1 bis 3 **dadurch gekennzeichnet, dass** das erste Material für den Mittelteil eine Wärmeleitfähigkeit von 21 bis 48 W/(mK) aufweist.

6. Ventilführung nach Anspruch 1, 2, 3 **dadurch gekennzeichnet, dass** das erste Material eine Porosität von 17 bis 20% aufweist.

7. Ventilführung nach einem der vorstehenden Ansprüche **gekennzeichnet durch** eine Kupferinfiltrierung der Außenseite und / oder Stirnseite des nockenseitigen Endes der Ventilführung, um die Öl- und Gasdichtigkeit zu erhöhen.

8. Ventilführung nach Anspruch 7 **dadurch gekennzeichnet, dass** die Kupferinfiltrierung den Bereich von der Außenseite bis zur Wandungsmitte, bevorzugt den 1 bis 3 mm tiefen Randschichtbereich, des nockenseitigen Endstücks umfasst.

9. Verfahren zur Herstellung einer Ventilführung nach einem der vorstehenden Ansprüche, **dadurch gekennzeichnet, dass** zunächst nacheinander die Pulver für die einzelnen Abschnitte der Ventilführung in eine Matrize, die koaxial zu einem Dorn angeordnet ist, gefüllt werden und anschließend die gesamte Ventilführung in der Matrize mit einem Presswerkzeug verdichtet wird, wobei die Form des Presslings insbesondere durch die Form der Matrize und des Dorns bestimmt wird, und in einem letzten Schritt die gesamte Ventilführung gesintert wird.

10. Verfahren nach Anspruch 9, **dadurch gekennzeichnet, dass** wenigstens einer der Füllschritte mit einer Vorverdichtung verbunden ist.

11. Verfahren zur Herstellung einer Ventilführung nach einem der Ansprüche 1 bis 8, **dadurch gekennzeichnet, dass** die einzelnen Abschnitte der Ventilführung pulvermetallurgisch durch Verdichten und Sintern gefertigt werden und durch Reibschweißen zur Ventilführung verbunden werden.

## Claims

1. Valve guide manufactured by powder-metallurgical processes for combustion engines based on Fe, said guide comprising a central section, an end piece facing the cam, and an end piece facing the duct, **characterized in that** the central section consists of a first material with a porosity of 15 to 20% and a density in the range of 6.5 to 7g/cm³ and the duct-side end piece of a second material, with the second material having a hardness in excess of 70 HRB and the first material having a hardness that is by at least 10 HRB lower than that of the second material.

2. Valve guide according to claim 1, **characterized in that** the cam-side end piece consists of the first, of the second or of a third material.

3. Valve guide according to claims 1 and 2, **characterized in that** the first material consists of 78 to 88 % w/w Fe, 10 to 20 % w/w Cu, 0.8 to 1 % w/w Mn, 0.4 to 0.6 % S, 0.8 to 1 % w/w C, and up to 4 % w/w of further elements.

4. Valve guide according to claims 1 and 2, **characterized in that** the second material consists of 82 to 86 % w/w Fe, 1.1 to 1.3 % w/w Cr, 12 to 16 % w/w Cu, 0.6 to 0.8 % w/w Mn, 0.4 to 0.6 % w/w S, 0.5 to 0.7 % w/w C, and 0.9 to 1.1 % w/w Sn.

5. Valve guide according to any one of claims 1 to 3, **characterized in that** the first material for the center section has a thermal conductivity ranging between 21 and 48 W/(mK).

6. Valve guide according to claims 1, 2, 3, **characterized in that** the first material has a porosity ranging between 17 and 20 %.

7. Valve guide according to any one of the preceding claims, **characterized by** a copper infiltration of the outside and/or front side of the cam-side end piece of the valve guide with a view to improving the tightness to oil and gas.

8. Valve guide according to claim 7, **characterized in that** the copper infiltration encompasses the area from the outside to the wall center, preferably the 1 to 3 mm deep surface layer area, of the cam-side end piece.

9. Method for the manufacture of a valve guide according to any one of the preceding claims, **characterized in that** at first the powders for the individual sections of the valve guide are successively filled into a die which is arranged coaxially with a punch, and following which the entire valve guide in the die is compacted by means of a pressing tool, with the form of the compact being in particular determined by the form of the die and the punch, and with the entire valve guide being sintered in a final work step.

10. Method according to claim 9, **characterized in that** for at least one of the filling steps a precompaction step is carried out.

11. Method for the manufacture of a valve guide according to any one of claims 1 to 8, **characterized in that** the individual sections of the valve guide are produced in a powder metallurgical way by compaction and sintering and joined by friction welding to form the valve guide.

## Revendications

1. Guide de soupape fabriqué par la métallurgie des poudres pour des moteurs à combustion interne à base de Fe avec une partie médiane, une pièce d'extrémité côté came et une pièce d'extrémité côté canal, **caractérisé en ce que** la partie médiane est composée d'un premier matériau avec une porosité de 15 à 20% et une densité en la zone de 6.5 à 7.0g/cm³ et la pièce d'extrémité côté canal est composée d'un deuxième matériau, dans lequel le deuxième matériau présente une dureté de plus de 70 HRB et le premier matériau présente une dureté moins élevée d'au moins 10 HRB.

2. Guide de soupape selon la revendication 1, **caractérisé en ce que** la pièce d'extrémité côté came se compose du premier, du deuxième ou d'un troisième matériau.

3. Guide de soupape selon la revendication 1 et 2, **caractérisé en ce que** le premier matériau se compose de 78 à 88 % en poids de Fe, 10 à 20 % en poids de Cu, 0,8 à 1 % en poids de Mn, 0,4 à 0,6 % en poids de S, 0,8 à 1 % en poids de C, et jusque 4 % en poids d'autres éléments.

4. Guide de soupape selon la revendication 1 et 2, **caractérisé en ce que** le deuxième matériau se compose de 82 à 86 % en poids de Fe, 1,1 à 1,3 % en poids de Cr, 12 à 16 % en poids de Cu, 0,6 à 0,8 % en poids de Mn, 0,4 à 0,6 % en poids de S, 0,5 à 0, 7 % en poids de C, et 0,9 à 1,1 % en poids de Sn.

5. Guide de soupape selon l'une quelconque des revendications 1 à 3, **caractérisé en ce que** le premier matériau destiné à la partie médiane présente une conductibilité thermique de 21 à 48 W/(mK).

6. Guide de soupape selon la revendication 1, 2, 3, **caractérisé en ce que** le premier matériau présente une porosité de 17 à 20 .

7. Guide de soupape selon l'une quelconque des revendications précédentes, **caractérisé par** une infiltration de cuivre dans le côté extérieur et/ou le côté frontal de l'extrémité côté came du guide de soupape, afin d'augmenter l'étanchéité à l'huile et au gaz.

8. Guide de soupape selon la revendication 7, **caractérisé en ce que** l'infiltration de cuivre comprend la région depuis le côté extérieur jusqu'au milieu de la paroi, de préférence la région de couche extérieure de 1 à 3 mm de profondeur, de la pièce d'extrémité côté came.

9. Procédé de fabrication d'un guide de soupape selon l'une quelconque des revendications précédentes, **caractérisé en ce que** l'on charge d'abord successivement les poudres pour les diverses parties du guide de soupape dans une matrice, qui est montée de façon coaxiale à un axe, puis on comprime tout le guide de soupape dans la matrice avec un outil de presse, dans lequel la forme de l'ébauche pressée est déterminée en particulier par la forme de la matrice et de l'axe, et dans une dernière étape on fritte le guide de soupape total.

10. Procédé selon la revendication 9, **caractérisé en ce qu'**au moins une des étapes de chargement est associée à une pré-compression.

11. Procédé de fabrication d'un guide de soupape selon l'une quelconque des revendications 1 à 8, **caractérisé en ce que** l'on fabrique les différentes parties du guide de soupape par la métallurgie des poudres par compression et frittage, et on les assemble en un guide de soupape par soudage par friction.
